# EUROPEAN PATENT APPLICATION

(11) **EP 4 530 798 A1**
(43) Date of publication of application: **02.04.2025**
(21) Application number: 23859122.6
(22) Date of filing: 11.08.2023
(51) Int. Cl.: G06F 1/329

(54) **TASK SCHEDULING METHOD AND RELATED DEVICE**

(30) Priority: 29.08.2022 CN 202211043554
(71) Applicant: Huawei Technologies Co., Ltd., Shenzhen, Guangdong 518129 (CN)
(72) Inventor: XU, Kuan, Shenzhen, Guangdong 518129 (CN); YAO, Yanxia, Shenzhen, Guangdong 518129 (CN)
(74) Representative: Epping - Hermann - Fischer
(86) International application number: PCT/CN2023/112509
(87) International publication number: WO 2024/046088

(57) **Abstract**

Embodiments of this application provide a task scheduling method and a related device, and relate to the field of intelligent terminal technologies. The method includes: when an application process generates a task, determining whether the task is a non-urgent task; if the task is the non-urgent task, obtaining a frequency and a load of a CPU of an electronic device; determining a normalized frequency of the CPU based on the frequency and the load of the CPU, where the normalized frequency is a frequency corresponding to a load of 100% of the CPU; determining whether the normalized frequency is less than or equal to a preset frequency; if the normalized frequency is less than or equal to the preset frequency, determining whether the electronic device is in a sleep state; and if the electronic device is in the sleep state, adjusting the frequency of the CPU to enable the load of the CPU to be a first preset value, so that an optimal energy efficiency ratio of the CPU is met, and executing the non-urgent task. In embodiments of this application, when a status of a system meets a requirement, and the electronic device is in the sleep state, the non-urgent task is processed. This ensures a system resource for executing a foreground task, prevents the system from being stalled, and improves user experience.

## Description

This application claims priority to Chinese Patent Application No. 202211043554.0, filed with the China National Intellectual Property Administration on August 29, 2022 and entitled "TASK SCHEDULING METHOD AND RELATED DEVICE", which is incorporated herein by reference in its entirety.

### TECHNICAL FIELD

This application relates to the field of intelligent terminal technologies, and in particular, to a task scheduling method and a related device.

### BACKGROUND

In a process in which an application runs on an electronic device (for example, a mobile terminal, a personal computer, an internet of things device, or a server), a large quantity of tasks are generated. Tasks generated by a foreground application thread and a background application thread are synchronously processed, and a non-urgent task generated by the background application thread preempts a system resource and a system service. Consequently, system resources for processing the task generated by the foreground application thread are insufficient, and a foreground application is stalled. This affects user experience.

### SUMMARY

In view of this, it is necessary to provide a task scheduling method to solve a problem that system resources for processing a foreground task are insufficient because a background non-urgent task occupies a system resource and a system service.

A first aspect of embodiments of this application provides a task scheduling method, including: when an application process generates a task, determining whether the task is a non-urgent task; if the task is the non-urgent task, obtaining a frequency and a load of a central processing unit CPU of an electronic device; determining a normalized frequency of the CPU based on the frequency and the load of the CPU, where the normalized frequency is a frequency corresponding to a load of 100% of the CPU; determining whether the normalized frequency is less than or equal to a preset frequency; if the normalized frequency is less than or equal to the preset frequency, determining whether the electronic device is in a sleep state; and if the electronic device is in the sleep state, adjusting the frequency of the CPU to enable the load of the CPU to be a first preset value, so that an optimal energy efficiency ratio of the CPU is met, and executing the non-urgent task.

According to this technical solution, whether a system of the electronic device is allowed to execute the non-urgent task can be accurately determined based on the normalized frequency of the CPU. Then, whether to execute the non-urgent task is determined based on whether the electronic device is in the sleep state, and the non-urgent task is processed when the frequency of the CPU meets the optimal energy efficiency ratio. **In** this case, power consumption of the system can be reduced, and a usage rate of system resources by a background task is not excessively high. This ensures a system resource occupied by a foreground task, prevents the system from being stalled, and effectively improves user experience.

**In** a possible implementation, the determining whether the task is a non-urgent task includes: when the application process generates the task, determining whether the application process is a background application process; and if the application process is the background application process, determining that the task is the non-urgent task. According to this technical solution, whether the task generated by the application process is the non-urgent task can be accurately determined.

In a possible implementation, the determining whether the application process is a background application process includes: invoking an activity of the application process by using an ActivityLifecycleCallbacks program, determining whether the activity of the application process runs in a background, and if the activity of the application process runs in the background, determining that the application process is the background application process. According to this technical solution, whether the application process is the background application process can be accurately determined.

In a possible implementation, the determining whether the application process is a background application process includes: invoking a foreground application process by using a UsageStatsManager program, determining whether the invoked foreground application process includes the application process, and if the invoked foreground application process does not include the application process, determining that the application process is the background process. According to this technical solution, whether the application process is the background application process can be accurately determined.

In a possible implementation, the determining whether the task is a non-urgent task includes: when the application process generates the task, determining whether the application process is the background application process, and determining whether the task expires; and if the application process is the background application process, and the task does not expire, determining that the task is the non-urgent task. According to this technical solution, whether the task generated by the application process is the non-urgent task can be accurately determined.

In a possible implementation, the determining whether the task is a non-urgent task includes: when the application process generates the task, determining whether the application process is the background application process, and determining whether the task is a high-load task; and if the application process is the background application process, and the task is the high-load task, determining that the task is the non-urgent task. According to this technical solution, whether the task generated by the application process is the non-urgent task can be accurately determined.

In a possible implementation, the determining whether the task is a high-load task includes: obtaining association information of the task and sending the association information of the task to a kernel layer; querying historical load information of the task by using the kernel layer, and determining whether the historical load information of the task is greater than or equal to a load threshold; and if the historical load information of the task is greater than or equal to the load threshold, determining that the task is the high-load task; or if the historical load information of the task is less than the load threshold, determining that the task is not the high-load task. According to this technical solution, whether the task generated by the application process is the high-load task can be accurately determined.

In a possible implementation, the obtaining a frequency and a load of a central processing unit CPU of an electronic device includes: obtaining a current frequency of a little core of the CPU and an overall load of the little core of the CPU through a resource scheduling service process of the electronic device. According to this technical solution, a frequency and a load of the little core of the CPU can be accurately obtained, and power consumption of the CPU during processing of the non-urgent task can be reduced.

In a possible implementation, an energy efficiency ratio table of the CPU is preset in the electronic device, and the determining a normalized frequency of the CPU based on the frequency and the load of the CPU includes: determining, by querying the energy efficiency ratio table, a performance score corresponding to a current frequency of the CPU; determining, based on the performance score corresponding to the current frequency and a current load, a performance score for a load of 100%; and determining, by querying the energy efficiency ratio table, a frequency corresponding to the performance score for the load of 100%, to obtain a current normalized frequency of the CPU. According to this technical solution, the normalized frequency of the CPU can be accurately determined.

In a possible implementation, the method further includes: determining whether a quantity of consecutive times the normalized frequency is greater than the preset frequency is greater than or equal to a second preset value; and if the quantity of consecutive times the normalized frequency is greater than the preset frequency is greater than or equal to the second preset value, increasing the preset frequency. According to this technical solution, the preset frequency can be set to better meet a requirement of the system.

In a possible implementation, the determining whether the electronic device is in a sleep state includes: determining whether a display is off; and if the display is off, determining that the electronic device is in the sleep state; or if the display is on, determining that the electronic device is not in the sleep state. According to this technical solution, whether the electronic device is in the sleep state can be accurately determined.

In a possible implementation, the determining whether the electronic device is in a sleep state includes: determining whether the display is off, and determining whether the electronic device is in a distributed scenario; and if the display is off, and the electronic device is not in the distributed scenario, determining that the electronic device is in the sleep state; or if the display is on, and/or the electronic device is in the distributed scenario, determining that the electronic device is not in the sleep state. According to this technical solution, whether the electronic device is in the sleep state can be accurately determined.

In a possible implementation, the determining whether the electronic device is in a distributed scenario includes: determining whether the electronic device and at least one terminal device are in a cooperative working mode; and if the electronic device and the at least one terminal device are in the cooperative working mode, determining that the electronic device is in the distributed scenario; or if the electronic device and the at least one terminal device are not in the cooperative working mode, determining that the electronic device is not in the distributed scenario. According to this technical solution, whether the electronic device is in the distributed scenario can be accurately determined.

In a possible implementation, the adjusting the frequency of the CPU to enable the load of the CPU to be a first preset value includes: writing a to-be-adjusted frequency value of the CPU into a kernel node, to adjust the frequency of the CPU until the load of the CPU is the first preset value. According to this technical solution, the non-urgent task can be processed under the optimal energy efficiency ratio of the CPU, to reduce power consumption of the system.

In a possible implementation, the method further includes: if the load of the CPU is adjusted to the first preset value, determining whether an energy efficiency ratio of the CPU is the optimal energy efficiency ratio; and if the energy efficiency ratio of the CPU is the optimal energy efficiency ratio, executing the non-urgent task when the load of the CPU is the first preset value; or if the energy efficiency ratio of the CPU is not the optimal energy efficiency ratio, continuing to adjust the frequency of the CPU until the energy efficiency ratio of the CPU is the optimal energy efficiency ratio. According to this technical solution, the non-urgent task can be processed under the optimal energy efficiency ratio of the CPU, to reduce power consumption of the system.

In a possible implementation, the method further includes: if the load of the CPU is adjusted to the first preset value, determining whether a difference between an energy efficiency ratio of the CPU and the optimal energy efficiency ratio is less than or equal to a third preset value; and if the difference between the energy efficiency ratio of the CPU and the optimal energy efficiency ratio is less than or equal to the third preset value, executing the non-urgent task when the load of the CPU is the first preset value; or if the difference between the energy efficiency ratio of the CPU and the optimal energy efficiency ratio is greater than the third preset value, continuing to adjust the frequency of the CPU until the difference between the energy efficiency ratio of the CPU and the optimal energy efficiency ratio is less than or equal to the third preset value. According to this technical solution, the non-urgent task can be processed when the CPU approaches the optimal energy efficiency ratio, to reduce power consumption of the system.

In a possible implementation, the method further includes: if the electronic device is in the sleep state, setting the non-urgent task to a first priority; or if the electronic device is not in the sleep state, setting the non-urgent task to a second priority, where the first priority is higher than the second priority. According to this technical solution, the non-urgent task can be prioritized.

In a possible implementation, the method further includes: if the electronic device is not in the sleep state, determining whether a system is in a boost state; and if the system is not in the boost state, setting the non-urgent task to the second priority; or if the system is in the boost state, setting the non-urgent task to a third priority, where the first priority is higher than the second priority, and the second priority is higher than the third priority. According to this technical solution, the non-urgent task can be prioritized.

According to a second aspect, an embodiment of this application provides a computer-readable storage medium, including computer instructions. When the computer instructions are run on an electronic device, the electronic device is enabled to perform the task scheduling method according to the first aspect.

According to a third aspect, an embodiment of this application provides an electronic device. The electronic device includes a processor and a memory. The memory is configured to store instructions. The processor is configured to invoke the instructions in the memory, to enable the electronic device to perform the task scheduling method according to the first aspect.

According to a fourth aspect, an embodiment of this application provides a computer program product. When the computer program product runs on a computer, the computer is enabled to perform the task scheduling method according to the first aspect.

According to a fifth aspect, an apparatus is provided. The apparatus has a function of implementing behavior of the electronic device in the method provided in the first aspect. The function may be implemented by hardware, or may be implemented by hardware executing corresponding software. The hardware or the software includes one or more modules corresponding to the foregoing function.

It should be understood that the computer-readable storage medium according to the second aspect, the electronic device according to the third aspect, the computer program product according to the fourth aspect, and the apparatus according to the fifth aspect all correspond to the method according to the first aspect. Therefore, for beneficial effects that can be achieved by the computer-readable storage medium, the electronic device, the computer program product, and the apparatus, refer to beneficial effects in the corresponding method provided above. Details are not described herein again.

### BRIEF DESCRIPTION OF DRAWINGS

FIG. 1 is a diagram of a structure of an electronic device according to an embodiment of this application;
FIG. 2 is a diagram of a software structure of an electronic device according to an embodiment of this application;
FIG. 3A is a diagram of an application scenario of a task scheduling method according to an embodiment of this application;
FIG. 3B is a diagram of another application scenario of a task scheduling method according to an embodiment of this application;
FIG. 3C is a diagram of another application scenario of a task scheduling method according to an embodiment of this application;
FIG. 3D is a diagram of another application scenario of a task scheduling method according to an embodiment of this application;
FIG. 4 is a schematic flowchart of a task scheduling method according to an embodiment of this application;
FIG. 5 is a schematic flowchart of determining whether a task is a non-urgent task according to an embodiment of this application;
FIG. 6 is a schematic flowchart of determining whether a task is a non-urgent task according to another embodiment of this application;
FIG. 7 is a schematic flowchart of determining whether a task is a non-urgent task according to another embodiment of this application;
FIG. 8 is a diagram of an energy efficiency ratio table of a CPU according to an embodiment of this application;
FIG. 9 is a schematic flowchart of a task scheduling method according to another embodiment of this application;
FIG. 10 is a schematic flowchart of a task scheduling method according to another embodiment of this application;
FIG. 11 is a schematic flowchart of a task scheduling method according to another embodiment of this application; and
FIG. 12 is a diagram of an application scenario of a task scheduling method according to an embodiment of this application.

### DESCRIPTION OF EMBODIMENTS

It should be noted that, in this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In the specification, claims, and accompanying drawings of this application, the terms "first", "second", "third", "fourth", and the like (if existent) are intended to distinguish between similar objects but do not necessarily indicate a specific order or sequence.

In embodiments of this application, the terms such as "example" or "for example" are used to give an example, an illustration, or a description. Any embodiment or design scheme described as an "example" or "for example" in embodiments of this application should not be construed as being more preferred or having more advantages than another embodiment or design scheme. Exactly, the terms such as "example" or "for example" are intended to present a related concept in a specific manner. The following embodiments and the features in embodiments may be mutually combined in the case of no conflict.

For ease of understanding, examples of some concepts related to embodiments of this application are described for reference.

Operating system (Operating System, OS): is a program that manages computer hardware and software resources, and is a kernel and a cornerstone of a computer system.

Kernel: A platform for communication between computer software and hardware is established. A kernel provides system services such as file management, a virtual memory, and device input/output (Input/Output, I/O).

Process (Process): is a running activity of a program in a computer regarding a data set, is a basic unit for a system to allocate and schedule resources, and is a basis of a structure of the operating system. A process is a basic entity for executing a program. In a contemporary thread-oriented computer structure, a process is a container of a thread. A program is a description of an instruction, data, and organizational forms of the instruction and the data. A process is an entity of a program. One process may be considered as one independent program with complete data space and code space in a memory. Data and variables owned by one process only belong to the process. Thread: is a minimum unit for performing an operation in a process, namely, a basic unit for performing processor scheduling. If a process is understood as a task logically completed by an operating system, a thread represents one of many possible subtasks for completion of the task. In other words, a thread exists in a process. One process includes one or more threads, and the threads share same code and global data.

Task (task): includes actions existing when a user operates a computer and corresponding response events (such as clicking a mouse button, right-clicking, opening a dialog box, closing a file, and starting a program). A task is a general term and means one activity completed by software. In embodiments of this application, one task may be one process or one thread. In short, a task means a series of operations that work together to achieve a specific purpose. For example, data is read and stored in a memory. This task may be implemented as one process or one thread (or an interrupt task).

Boost (Boost): Performance and frequency boost phase of a central processing unit (central processing unit, CPU).

An electronic device may communicate with another electronic device or server by using a communication network. The electronic device to which embodiments of this application are applied may be a communication device, for example, may be a server or a terminal device. The terminal device may include at least one of the following: a mobile phone, a foldable electronic device, a tablet computer, a personal computer (personal computer, PC), a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, or a smart city device. A specific type of the electronic device is not specially limited in embodiments of this application. The communication network may be a wired network or may be a wireless network. For example, the communication network may be a local area network (local area network, LAN), or may be a wide area network (wide area network, WAN), for example, the internet. When the communication network is a local area network, for example, the communication network may be a near-distance communication network such as a wireless fidelity (wireless fidelity, Wi-Fi) hotspot network, a Wi-Fi P2P network, a Bluetooth network, a ZigBee network, or a near field communication (near field communication, NFC) network. When the communication network is a wide area network, for example, the communication network may be a 3rd generation mobile communication technology (3rd generation wireless telephone technology, 3G) network, a 4th generation mobile communication technology (the 4th generation mobile communication technology, 4G) network, a 5th generation mobile communication technology (5th generation mobile communication technology, 5G) network, a future evolved public land mobile network (public land mobile network, PLMN), or the internet.

In some embodiments, one or more APPs (Applications) may be installed on the electronic device. The APP may be referred to as an application for short, and is a software program that can implement one or more specific functions. For example, the application may be an instant messaging application, a video application, an audio application, an image shooting application, or a cloud desktop application. The instant messaging application may include, for example, a messaging application, WeChat^{®} (WeChat^{®}), WhatsApp Messenger^{®}, Line^{®} (Line^{®}), Instagram (instagram^{®}), Kakao Talk^{®}, and DingTalk^{®}. The image shooting application may include, for example, a camera application (a system camera or a third-party camera application). The video application may include, for example, YouTube^{®}, Twitter^{®}, TikTok^{®}, iQIYI^{®}, and Tencent Video^{®}. The audio application may include, for example, KuGou^{®}, XiaMi Music^{®}, and QQ Music^{®}. An application mentioned in the following embodiments may be a system application installed before delivery of the electronic device, or may be a third-party application downloaded by a user from a network or obtained by the user from another electronic device during use of the electronic device.

The electronic device includes but is not limited to using iOS^{®}, Android^{®} (Android^{®}), Windows Mobile^{®}, HarmonyOS^{®}, or another operating system.

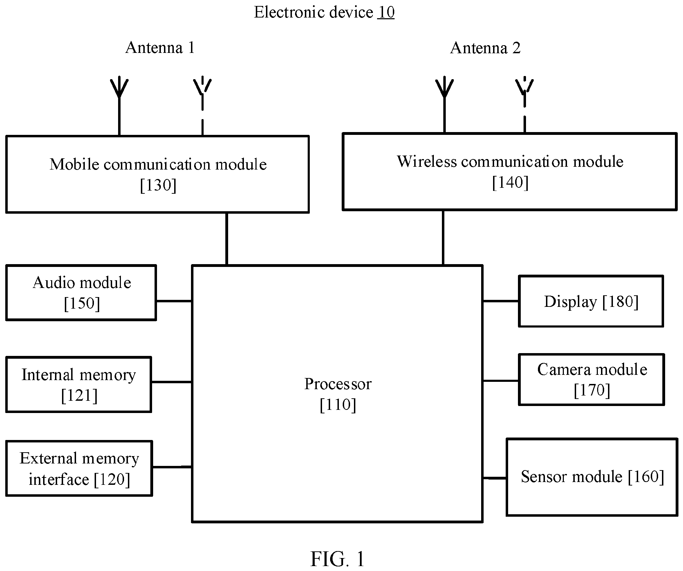

FIG. 1 is a diagram of a structure of an electronic device 10.

The electronic device 10 may include a processor 110, an external memory interface 120, an internal memory 121, an antenna 1, an antenna 2, a mobile communication module 130, a wireless communication module 140, an audio module 150, a sensor module 160, a camera module 170, a display 180, and the like.

It may be understood that a structure shown in this embodiment of this application does not constitute any specific limitation on the electronic device 10. In some other embodiments of this application, the electronic device 10 may include more or fewer components than those shown in the figure, or some components may be combined, or some components may be split, or there may be a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The processor may generate an operation control signal based on instruction operation code and a time sequence signal, to complete control of instruction reading and instruction execution.

A memory may be further disposed in the processor 110, and is configured to store instructions and data. In some embodiments, the memory in the processor 110 may be a cache. The memory may store instructions or data that has been used or frequently used by the processor 110. If the processor 110 needs to use the instructions or the data, the processor 110 may directly invoke the instructions or the data from the memory, to avoid repeated access and reduce a waiting time of the processor 110. This improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 may be connected to a module, for example, the audio module, the wireless communication module, the display, or a camera, through at least one of the foregoing interfaces.

It may be understood that an interface connection relationship between the modules shown in this embodiment of this application is merely an example for description, and does not constitute any limitation on the structure of the electronic device 10. In some other embodiments of this application, the electronic device 10 may alternatively use an interface connection manner different from that in the foregoing embodiment, or use a combination of a plurality of interface connection manners.

A wireless communication function of the electronic device 10 may be implemented through the antenna 1, the antenna 2, the mobile communication module 130, the wireless communication module 140, the modem processor, the baseband processor, and the like.

The antenna 1 and the antenna 2 are configured to transmit and receive an electromagnetic wave signal. Each antenna in the electronic device 10 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 130 may provide a solution applied to the electronic device 10 for wireless communication such as 2G/3G/4G/5G. The mobile communication module 130 may include at least one filter, a switch, a power amplifier, a low noise amplifier, and the like. The mobile communication module 130 may receive an electromagnetic wave through the antenna 1, perform processing such as filtering or amplification on the received electromagnetic wave, and transmit the electromagnetic wave to the modem processor for demodulation. The mobile communication module 130 may further amplify a signal modulated by the modem processor, and convert the signal into an electromagnetic wave for radiation through the antenna 1. In some embodiments, at least some functional modules of the mobile communication module 130 may be disposed in the processor 110. In some embodiments, at least some functional modules of the mobile communication module 130 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using the audio module, or displays an image or a video by using the display 180. In some embodiments, the modem processor may be an independent component. In some other embodiments, the modem processor may be independent of the processor 110, and is disposed in a same device as the mobile communication module 130 or another functional module.

The wireless communication module 140 may provide a wireless communication solution that is applied to the electronic device 10 and that includes a wireless local area network (wireless local area network, WLAN), Bluetooth (Bluetooth, BT), Bluetooth low energy (Bluetooth low energy, BLE), ultra-wideband (ultra-wideband, UWB), global navigation satellite system (global navigation satellite system, GNSS), frequency modulation (frequency modulation, FM), NFC, an infrared (infrared, IR) technology, and the like. The wireless communication module 140 may be one or more components integrating at least one communication processing module. The wireless communication module 140 receives an electromagnetic wave through the antenna 2, performs frequency modulation and filtering processing on an electromagnetic wave signal, and sends a processed signal to the processor 110. The wireless communication module 140 may further receive a to-be-sent signal from the processor 110, perform frequency modulation and amplification on the signal, and convert the signal into an electromagnetic wave for radiation through the antenna 2.

In some embodiments, in the electronic device 10, the antenna 1 is coupled to the mobile communication module 130, and the antenna 2 is coupled to the wireless communication module 140, so that the electronic device 10 can communicate with a network and another electronic device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The electronic device 10 may implement a display function by using the GPU, the display 180, the application processor, and the like. The GPU is a microprocessor for image processing, and is connected to the display 180 and the application processor. The GPU is configured to: perform mathematical and geometric computation, and render an image. The processor 110 may include one or more GPUs that execute program instructions to generate or change display information.

The sensor module may include a touch sensor, a pressure sensor, a fingerprint sensor, and the like. The camera module 170 includes a camera. The display 180 is configured to display an image, a video, and the like. The display 180 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 10 may include one or more displays 180.

The electronic device 10 may implement a photographing function by using the camera module 170, the ISP, the video codec, the GPU, the display 180, the application processor AP, the neural-network processing unit NPU, and the like.

The digital signal processor is configured to process a digital signal, and may further process another digital signal. For example, when the electronic device 10 selects a frequency, the digital signal processor is configured to perform Fourier transform and the like on frequency energy. The video codec is configured to compress or decompress a digital video. The electronic device 10 may support one or more types of video codecs. In this way, the electronic device 10 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, a transfer mode between human brain neurons, and may further continuously perform self-learning. The NPU may implement applications such as intelligent cognition of the electronic device 10, for example, image recognition, facial recognition, speech recognition, and text understanding.

The external memory interface 120 may be configured to connect to an external storage card, for example, a micro SD card, to extend a storage capability of the electronic device 10. The external storage card communicates with the processor 110 through the external memory interface 120, to implement a data storage function. For example, files such as music and videos are stored in the external storage card, or files such as music and videos are transmitted from the electronic device to the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) and the like that are created during use of the electronic device 10. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121, and/or the instructions stored in the memory disposed in the processor, to perform various function methods or data processing of the electronic device 10.

The audio module 150 is configured to convert digital audio information into an analog audio signal for output, and is also configured to convert an analog audio input into a digital audio signal. The audio module 150 may be further configured to encode and decode an audio signal. In some embodiments, the audio module 150 may be disposed in the processor 110, or some functional modules of the audio module 150 are disposed in the processor 110.

A software system of the electronic device 10 may use a layered architecture, an event-driven architecture, a microkernel architecture, a microservice architecture, or a cloud architecture. In embodiments of this application, an Android system with a layered architecture is used as an example to describe a software structure of the electronic device 10.

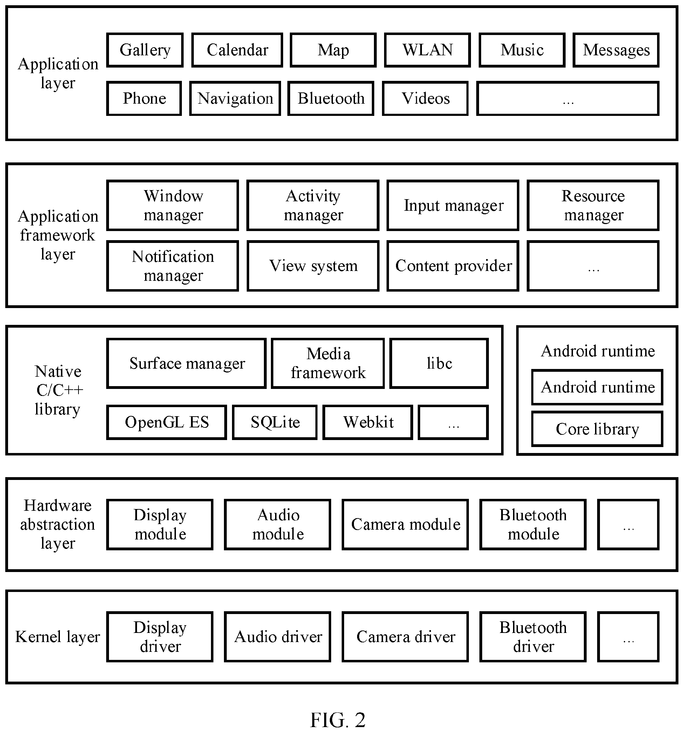

FIG. 2 is a block diagram of a software structure of the electronic device 10 according to an embodiment of this application.

In a layered architecture, software is divided into several layers, and each layer has a clear role and task. The layers communicate with each other through a software interface. In some embodiments, the Android system is divided into five layers: an application layer, an application framework layer, an Android runtime (Android runtime, ART) and a native C/C++ library, a hardware abstraction layer (Hardware Abstraction Layer, HAL), and a kernel layer from top to bottom.

The application layer may include a series of application packages.

As shown in FIG. 2, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a resource manager, a notification manager, an activity manager, an input manager, and the like.

The window manager provides a window manager service (Window Manager Service, WMS). The WMS may be used for window management, window animation management, surface management, and as a transfer station for an input system.

The content provider is configured to: store and obtain data, and enable the data to be accessed by an application. The data may include a video, an image, audio, calls that are made and received, a browsing history and bookmarks, an address book, and the like.

The view system includes visual controls such as a control for displaying a text and a control for displaying a picture. The view system may be configured to construct an application. A display interface may include one or more views. For example, a display interface including an SMS message notification icon may include a view for displaying a text and a view for displaying a picture.

The resource manager provides various resources such as a localized character string, an icon, a picture, a layout file, and a video file for an application.

The notification manager enables an application to display notification information in a status bar, and may be configured to convey a notification message that may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application that is run in a background, or may be a notification that appears on the screen in a form of a dialog window. For example, text information is displayed in the status bar, a prompt tone is played, the electronic device vibrates, or an indicator light blinks.

The activity manager may provide an activity manager service (Activity Manager Service, AMS). The AMS may be used to start, switch, and schedule system components (for example, activities, services, content providers, or broadcast receivers), and manage and schedule application processes.

The input manager may provide an input manager service (Input Manager Service, IMS). The IMS may be used to manage a system input, for example, a touchscreen input, a button input, or a sensor input. The IMS obtains an event from an input device node and allocates the event to an appropriate window through interaction with the WMS.

The Android runtime includes a core library and an Android runtime. The Android runtime is responsible for converting source code into machine code. The Android runtime mainly uses an ahead of time (ahead or time, AOT) compilation technology and a just in time (just in time, JIT) compilation technology.

The core library is mainly used to provide a basic function of a Java class library, for example, a basic data structure, a mathematics library, an I/O library, a tool library, a database, or a network library. The core library provides an API for a user to develop an Android application.

The native C/C++ library may include a plurality of functional modules, such as a surface manager (surface manager), a media framework (Media Framework), libc, OpenGL ES, SQLite, and Webkit. The surface manager is configured to manage a display subsystem and provide fusion of 2D and 3D layers for a plurality of applications. The media framework supports playback and recording of audio and videos in a plurality of commonly used formats, static image files, and the like. The media library may support a plurality of audio and video encoding formats, for example, MPEG-4, H.264, MP3, AAC, AMR, JPG, and PNG. The OpenGL ES is used for drawing and operating 2D and 3D graphics in an application. The SQLite provides a lightweight relational database for an application of the electronic device 10.

The hardware abstraction layer runs in user space (user space), encapsulates a kernel layer driver, and provides an invocation interface for an upper layer.

The kernel layer is a layer between hardware and software. The kernel layer includes at least a display driver, a camera driver, an audio driver, and a sensor driver.

As configuration of an intelligent electronic device, for example, a smartphone or a personal computer, is increasingly high, a user has an increasingly high requirement for performance of the intelligent electronic device. Especially in a foreground scenario in which human-machine interaction is frequent, and visual perception is obvious, for example, in scenarios such as starting an application, performing fingerprint recognition, and turning on a display, an application is quickly started, a fingerprint recognition speed is fast, and a display is quickly turned on, so that better performance experience can be brought to the user. However, in a human-machine interaction process, in addition to executing a task of a foreground process, a system further needs to execute a task generated by a background process. If an excessively large quantity of tasks are generated by the background process, or a high-load task is included, a large quantity of system resources, such as a CPU resource and a storage resource, are occupied. Consequently, system resources allocated to the task generated by a foreground are insufficient, and the system is stalled. This affects user experience.

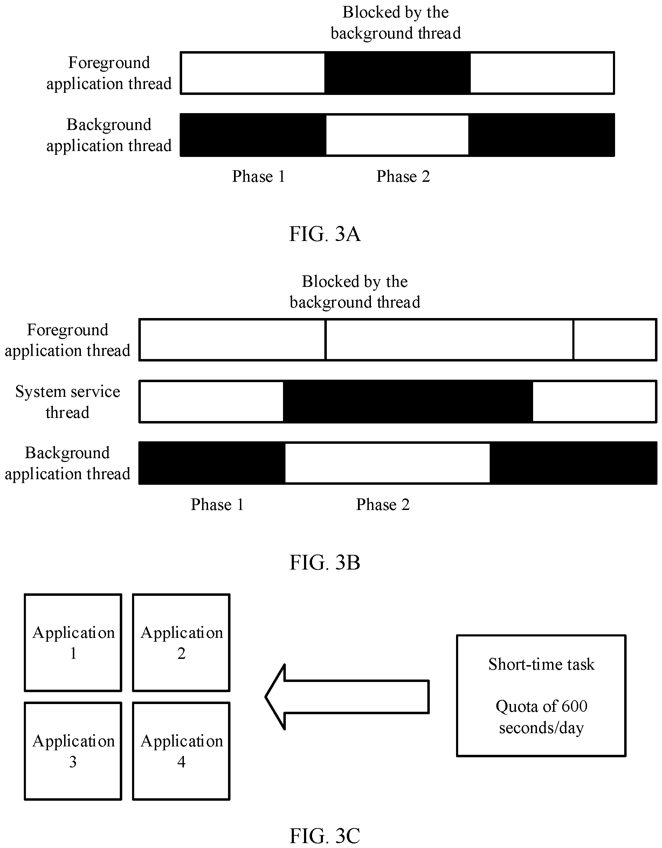

To better understand the task scheduling method provided in embodiments of this application, with reference to FIG. 3A to FIG. 3D, the following describes, by using examples, diagrams of an application scenario of the task scheduling method provided in embodiments of this application. An operating system and an application may be installed on the electronic device 10. The application may be a program that provides a service or is oriented to a user, or the application may be a program of another type. This is not limited in this application. For example, the electronic device 10 is a server, and the application may be a service program installed on the server, or the electronic device 10 is a mobile phone, and the application may be an APP installed on the mobile phone. When the electronic device receives an input operation of the user, an application thread responding to the input operation is a foreground application thread, and is configured to execute a foreground task. For example, the user starts an application, and a task of starting the application is a foreground task. An application thread before the input operation is received is a background application thread, and is configured to execute a background task. For example, refreshing an interface of an application running in a background is a background task. Refer to FIG. 3A. After receiving the input operation of the user, the electronic device establishes the foreground application thread in response to the input operation, to execute the foreground task. In a phase 1, a foreground application generates a task, and the foreground application thread executes the task. In this case, the background application thread is in an idle state. In a phase 2, a background application generates a task, and the background application thread executes the task. In this case, due to limited system resources, the foreground application thread is blocked by the background application thread. After the foreground application generates a task, the foreground application thread cannot execute the task in a timely manner. Consequently, a system may be stalled, and cannot respond to a user operation in a timely manner. This affects user experience.

Refer to FIG. 3B. After an application generates a task, an application thread needs to depend on a system service to cooperatively process the task. For example, a window manager service (Window Manager Service) and a drawing and rendering service (SurfaceFlinger) are required to execute an interface refreshing task, and a data collection task of a sports and health application depends on a sensor manager service (Sensor Manager Service). After receiving the input operation of the user, the electronic device establishes the foreground application thread in response to the input operation, to execute the foreground task. In a phase 1, the foreground application generates a task, and the foreground application thread and a system service thread cooperatively execute the task. In this case, the background application thread is in the idle state. In a phase 2, the background application generates a task, and the background application thread executes the task. In this case, due to limited system resources, the system service thread is blocked by the background application thread. After the foreground application generates a task, the foreground application thread and the system service thread cannot cooperatively execute the task. Consequently, the system may be stalled. This affects user experience.

Refer to FIG. 3C. To avoid a case in which the foreground task cannot be processed in a timely manner because execution of the background task occupies a system resource, a time for executing the background task may be set for a third-party application. For example, each third-party application is assigned 600 seconds to execute the background task. In this case, a quota time for the third-party application to process the background task is limited, and a time for processing the background task (for example, a non-perceivable task) can be reduced. This reduces a probability that the foreground application thread is blocked, and alleviates a phenomenon that the foreground application thread is blocked. However, execution of the background task may still conflict with execution of a task by the foreground application thread. In addition, the time for executing the background task is limited, and behavior of the background application is limited. Consequently, some background tasks may not be processed in a timely manner, space for the background application to run is limited, and it is difficult to meet a user requirement. This affects user experience.

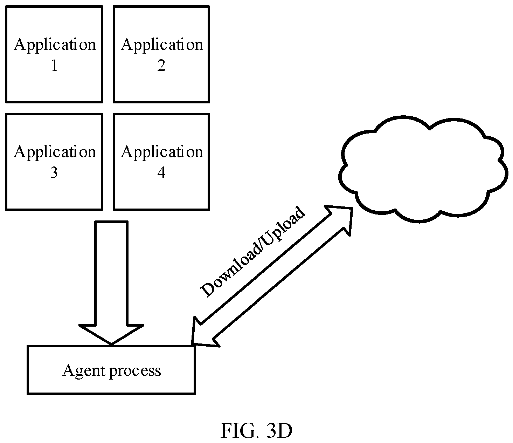

Refer to FIG. 3D. To avoid a case in which the foreground task cannot be processed in a timely manner because execution of a download task and execution of an upload task in the background occupy system resources, the download task and the upload task may be uniformly executed through an agent process, to reduce occupation of system resources by the background application thread. However, a background task of the agent process is still executed randomly due to lack of management and control. Consequently, normal execution of the foreground task is affected, and the system may be stalled. This affects user experience.

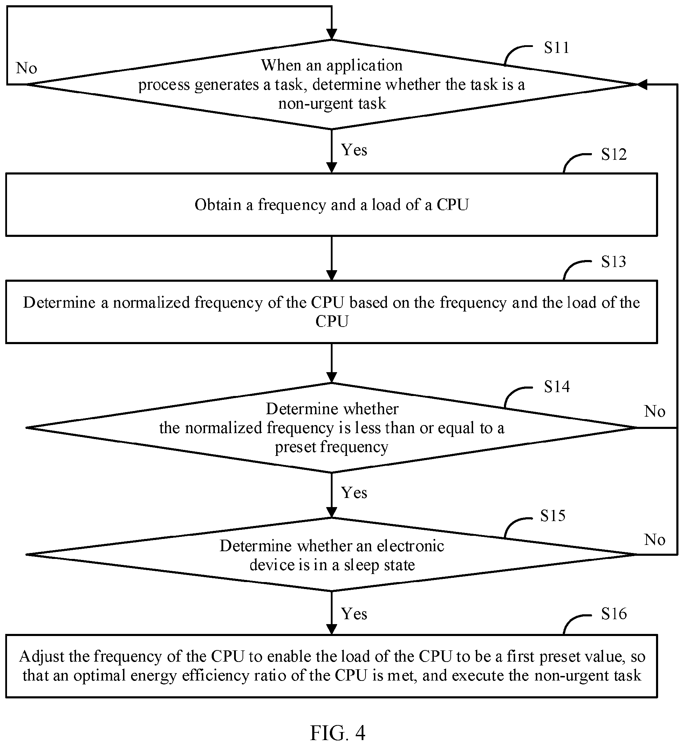

To avoid a case in which system resources occupied by the foreground task are insufficient due to an excessively high usage rate of system resources by the background task, and consequently, the system is stalled, and user experience is affected, an embodiment of this application provides a task scheduling method. With reference to FIG. 4, the following describes an example of a schematic flowchart of a task scheduling method according to an embodiment of this application. The method is applied to an electronic device, and the task scheduling method includes the following steps.

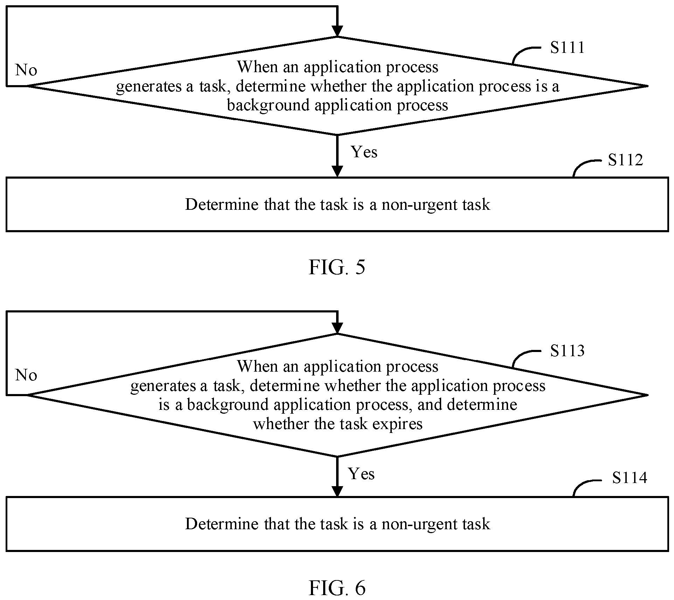

S11: When an application process generates a task, determine whether the task is a non-urgent task. In an embodiment of this application, a detailed procedure for determining whether the task is a non-urgent task is shown in FIG. 5, and specifically includes the following steps.

S111: When the application process generates the task, determine whether the application process is a background application process.

In an embodiment of this application, an importance attribute is preset for the application process, and a foreground application process and the background application process each include a plurality of preset importance attributes. The determining whether the application process is a background application process includes: obtaining the importance attribute of the application process by using a RunningProcess program, determining whether the importance attribute of the application process is one of preset attributes of the background application process, and if the importance attribute of the application process is one of the preset attributes of the background application process, determining that the application process is the background application process. In another embodiment of this application, the determining whether the application process is a background application process includes: invoking an activity (Activity) of the application process by using an ActivityLifecycleCallbacks program, determining whether the activity of the application process runs in a background, and if the activity of the application process runs in the background, determining that the application process is the background application process.

In another embodiment of this application, the determining whether the application process is a background application process includes: invoking a foreground application process by using a UsageStatsManager program, determining whether the invoked foreground application process includes the application process, and if the invoked foreground application process does not include the application process, determining that the application process is the background application process.

S112: If the application process is the background application process, determine that the task is the non-urgent task.

In an embodiment of this application, if it is determined that the task is the non-urgent task, proceed to S12 in the procedure; or if it is determined that the task is not the non-urgent task, continue to perform S11 in the procedure.

In another embodiment of this application, a detailed procedure for determining whether the task is a non-urgent task is shown in FIG. 6, and specifically includes the following steps.

S113: When the application process generates the task, determine whether the application process is the background application process, and determine whether the task expires.

In an embodiment of this application, each task generated by the application process has an expected processing time. The expected processing time is a time in which the task is expected to be executed. A reference of the expected processing time is a time that is in a unit of millisecond (ms) and starts to be counted after the electronic device is powered on. For example, if an expected processing time of a task task1 is 100 ms, the expected processing time of the task task1 is the 100^{th} ms after the electronic device is powered on.

In an embodiment of this application, the determining whether the task expires includes: determining whether the time counted after the electronic device is powered on exceeds an expected processing time of the task; and if the time counted after the electronic device is powered on exceeds the expected processing time of the task, determining that the task expires; or if the time counted after the electronic device is powered on does not exceed the expected processing time of the task, determining that the task does not expire.

For example, if the time counted after the electronic device is powered on is 120 ms, and the expected processing time of the task is 130 ms, the time counted after the electronic device is powered on does not exceed the expected processing time of the task, and it is determined that the task does not expire. For another example, if the time counted after the electronic device is powered on is 150 ms, and the expected processing time of the task is 130 ms, the time counted after the electronic device is powered on exceeds the expected processing time of the task, and it is determined that the task expires.

S114: If the application process is the background application process, and the task does not expire, determine that the task is the non-urgent task.

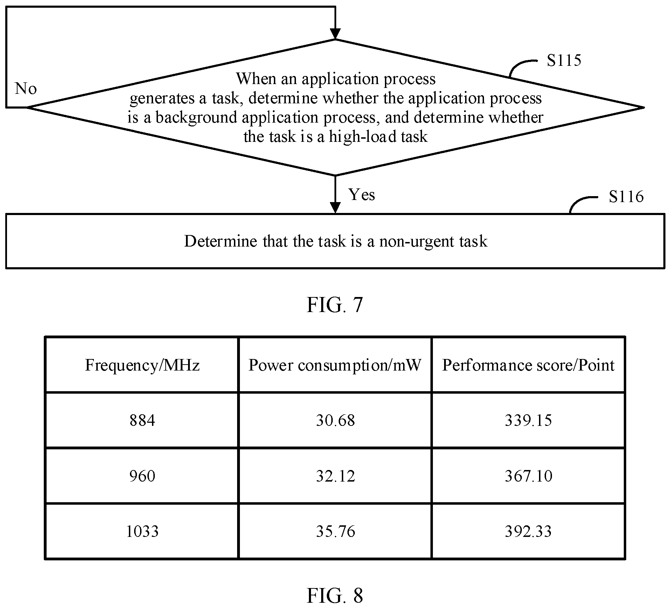

In another embodiment of this application, a detailed procedure for determining whether the task is a non-urgent task is shown in FIG. 7, and specifically includes the following steps.

S115: When the application process generates the task, determine whether the application process is the background application process, and determine whether the task is a high-load task.

In another embodiment of this application, a kernel layer records historical load information of all tasks executed by a system of the electronic device. The load information includes a maximum load and/or an average load in a task execution process. A load may include but is not limited to one or more of the following: a usage rate of a CPU, a usage rate of a memory, or pressure stall information (Pressure Stall Information, PSI). A PSI program is an open-source program configured to evaluate system resource pressure. The PSI indicates a time that task execution is stalled due to the resource pressure, quantizes a task execution interruption caused due to limited hardware resources, and counts a time that a task waits for a hardware resource in a system. The PSI is used as an indicator for measuring hardware resource pressure. A longer stalling time indicates greater resource pressure. The hardware resources may include resources such as a CPU, a memory, and an I/O (Input/Output, input/output).

In another embodiment of this application, the determining whether the task is a high-load task includes: obtaining association information of the task and sending the association information of the task to a kernel layer; querying historical load information of the task by using the kernel layer, and determining whether the historical load information of the task is greater than or equal to a load threshold; and if the historical load information of the task is greater than or equal to the load threshold, determining that the task is the high-load task; or if the historical load information of the task is less than the load threshold, determining that the task is not the high-load task. For example, if the load information is a usage rate of a CPU, the load threshold may be 20%; if the load information is a usage rate of a memory, the load threshold may be 20%; or if the load information is PSI, the load threshold may be 0.1 second.

In another embodiment of this application, the determining whether the task is a high-load task includes: obtaining association information of the task and sending the association information of the task to a kernel layer; querying, by using the kernel layer, whether the task is a task that has been executed by the system; and if the task is the task that has been executed by the system, querying historical load information of the task and determining whether the historical load information of the task is greater than or equal to a load threshold; and if the load information of the task is greater than or equal to the load threshold, determining that the task is the high-load task; or if the load information of the task is less than the load threshold, determining that the task is not the high-load task; or if the task is a task that has not been executed by the system, determining that the task is not the high-load task.

In another embodiment, if the task is the task that has not been executed by the system, the kernel layer queries a task whose type is the same as that of the task and queries historical load information of the task of the same type, and whether the historical load information of the task of the same type is greater than or equal to the load threshold is determined. If the historical load information of the task of the same type is greater than or equal to the load threshold, it is determined that the task is the high-load task; or if the historical load information of the task of the same type is less than the load threshold, it is determined that the task is not the high-load task. In another embodiment of this application, the determining whether the task is a high-load task includes: obtaining association information of the task and determining whether the task has a high-load task marker; and if the task has the high-load task marker, determining that the task is the high-load task; or if the task does not have the high-load task marker, determining that the task is not the high-load task.

In another embodiment of this application, a high-load task marker is added to the task, so that the task is marked as the high-load task. Specifically, load information of each task in an execution process is monitored. If a quantity of times load information of a task during execution in a first preset time period is greater than or equal to the load threshold is greater than or equal to a preset quantity of times, a high-load task marker is added to the task, so that the task is marked as the high-load task. If a quantity of times the load information of the task with the high-load task marker during execution in a second preset time period is greater than or equal to the load threshold is less than the preset quantity of times, the high-load task marker of the task is canceled. Optionally, the first preset time period is one week, the second preset time period is one month, and the preset quantity of times is 10.

S116: If the application process is the background application process, and the task is the high-load task, determine that the task is the non-urgent task.

S12: If the task is the non-urgent task, obtain a frequency and a load of a CPU.

In an embodiment of this application, a frequency point of the CPU is obtained, to obtain the frequency of the CPU. The frequency point is a number of a fixed frequency, and the load is a usage rate of the CPU. It should be noted that a plurality of frequency points are preset for the CPU of the electronic device, each frequency point corresponds to one frequency, and the CPU may work at a frequency corresponding to each frequency point. For example, three frequency points are preset for the CPU. A frequency corresponding to a frequency point 1 is 3.13 GHz, a frequency corresponding to a frequency point 2 is 2.54 GHz, and a frequency corresponding to a frequency point 3 is 2.04 GHz. In this case, the CPU may work at a frequency of 3.13 GHz, 2.54 GHz, or 2.04 GHz.

In an embodiment of this application, based on a requirement, cores of the CPU may include a big core and a little core, or a big core, a medium core, and a little core. Performance of the big core, performance of the medium core, and performance of the little core are in descending order. A task (for example, an interface refreshing task) that needs to be quickly responded to or that can be perceived by a user may be processed by using the big core of the CPU. A task (for example, a download task or an upload task) that does not need to be quickly responded to or that cannot be perceived by the user may be processed by using the medium core or the little core of the CPU.

In an embodiment of this application, the obtaining a frequency and a load of a CPU includes: obtaining a current frequency of a little core of the CPU and an overall load of the little core of the CPU through a resource scheduling service process of a system. It may be understood that, to avoid a case in which the CPU cannot process a key task in a timely manner because a non-urgent task occupies too many resources of the CPU, the non-urgent task is processed by using the little core of the CPU. In this case, the frequency and the load of only the little core of the CPU need to be obtained. In another embodiment, based on a requirement, the non-urgent task may alternatively be processed by using the big core or the medium core of the CPU. In this case, a frequency and a load of the big core or the medium core of the CPU can be obtained through the resource scheduling service process of the system.

S13: Determine a normalized frequency of the CPU based on the frequency and the load of the CPU.

In an embodiment of this application, the normalized frequency is a frequency corresponding to a load of 100% of the CPU. The electronic device pre-stores an energy efficiency ratio table of the CPU. The energy efficiency ratio table of the CPU records a correspondence between a frequency of the CPU, power consumption, and a performance score. An energy efficiency ratio of the CPU is provided by a system side of the electronic device. FIG. 8 is a diagram of an energy efficiency ratio table of a CPU according to an embodiment of this application. For example, when a frequency of the CPU is 884 MHz, corresponding power consumption is 30.68 mW, and a performance score is 339.15 points.

In an embodiment of this application, the energy efficiency ratio of the CPU is a ratio of a performance score of the CPU to power consumption, or a ratio of a frequency of the CPU to power consumption. The determining a normalized frequency of the CPU based on the frequency and the load of the CPU includes: determining, by querying the energy efficiency ratio table of the CPU, a performance score corresponding to a current frequency of the CPU; determining, based on the performance score corresponding to the current frequency and a current load, a performance score for a load of 100%; and determining, by querying the energy efficiency ratio table of the CPU, a frequency corresponding to the performance score for the load of 100%, to obtain a current normalized frequency of the CPU. For example, if the current frequency of the CPU is 960 MHz, and the current load is 50%, it is learned, by querying the energy efficiency ratio table, that a performance score corresponding to the current frequency is 367.10 points. When the load of the CPU increases from 50% to 100%, the performance score may decrease proportionally. Therefore, when the load is 100%, the performance score of the CPU is 367.10/2=183.55 points. It is determined, by querying the energy efficiency ratio table of the CPU, that a frequency corresponding to the performance score of 183.55 points is 412 MHz, that is, the current normalized frequency of the CPU is 412 MHz.

S14: Determine whether the normalized frequency is less than or equal to a preset frequency.

Optionally, the preset frequency is 0.5 GHz. Whether the normalized frequency is less than or equal to the preset frequency is determined to determine whether the non-urgent task is allowed to be executed in a current system status. If the normalized frequency is less than or equal to the preset frequency, it indicates that the current system status is idle, and it is determined that the non-urgent task is allowed to be executed in the current system status. If the normalized frequency is greater than the preset frequency, it indicates that the current system status is busy, and it is determined that the non-urgent task is not allowed to be executed in the current system status.

In an embodiment of this application, the method further includes: determining whether a quantity of consecutive times the normalized frequency is greater than the preset frequency is greater than or equal to a second preset value; and if the quantity of consecutive times the normalized frequency is greater than the preset frequency is greater than or equal to the second preset value, increasing the preset frequency. Optionally, the second preset value is 5. It may be understood that, if the quantity of consecutive times the normalized frequency is greater than the preset frequency is greater than or equal to the second preset value, it indicates that the preset frequency may be set to be excessively small. In this case, the preset frequency increases by one level, so that a current normalized frequency of the CPU meets a condition more easily, and the non-urgent task is more easily allowed to be executed in a system status. In this way, the non-urgent task can be processed when necessary.

In an embodiment of this application, the preset frequency may be adjusted based on a preset adjustment amplitude or levels corresponding to different frequencies. For example, the preset adjustment amplitude or one level may be 0.1 GHz. If the preset frequency is 0.5 GHz, and the second preset value is 5, when the quantity of consecutive times the normalized frequency is greater than 0.5 GHz is greater than or equal to 5, the preset frequency increases by one level, that is, the preset frequency of 0.5 GHz increases by 0.1 GHz to 0.6 GHz.

S15: If the normalized frequency is less than or equal to the preset frequency, determine whether the electronic device is in a sleep state.

In an embodiment of this application, the determining whether the electronic device is in a sleep state includes: determining whether a display is off (screen-off); and if the display is off, determining that the electronic device is in the sleep state; or if the display is on, determining that the electronic device is not in the sleep state.

In an embodiment of this application, the determining whether a display is off includes: determining whether luminance of the display is 0; and if the luminance of the display is not 0, determining that the display is on; or if the luminance of the display is 0, determining that the display is off.

In another embodiment of this application, the determining whether the electronic device is in a sleep state includes: determining whether the display is off, and determining whether the electronic device is in a distributed scenario; and if the display is off, and the electronic device is not in the distributed scenario, determining that the electronic device is in the sleep state; or if the display is on, and/or the electronic device is in the distributed scenario, determining that the electronic device is not in the sleep state.

In another embodiment of this application, the determining whether the electronic device is in a distributed scenario includes: determining whether the electronic device and at least one terminal device are in a cooperative working mode; and if the electronic device and the at least one terminal device are in the cooperative working mode, determining that the electronic device is in the distributed scenario; or if the electronic device and the at least one terminal device are not in the cooperative working mode, determining that the electronic device is not in the distributed scenario. The cooperative working mode may be a multi-screen cooperative working mode. The electronic device is in a running state, but interface content is displayed by another terminal device that is communicatively connected to the electronic device. For example, when the electronic device receives a voice call, voice interaction is performed by a tablet computer that is communicatively connected to the electronic device. In this case, the display of the electronic device is off, but the electronic device still needs to be in a running state, to transmit voice to a receiver.

S16: If the electronic device is in the sleep state, adjust the frequency of the CPU to enable the load of the CPU to be a first preset value, so that an optimal energy efficiency ratio of the CPU is met, and execute the non-urgent task. Optionally, the first preset value is 90%.

In an embodiment of this application, if the electronic device is in the sleep state, it indicates that the electronic device is in an idle state, and may execute the non-urgent task. Before the non-urgent task is executed, the frequency of the CPU is adjusted to enable the load of the CPU to be the first preset value.

In an embodiment of this application, the adjusting the frequency of the CPU to enable the load of the CPU to be a first preset value, so that an optimal energy efficiency ratio of the CPU is met includes: writing a to-be-adjusted frequency value of the CPU into a kernel node, to adjust the frequency of the CPU until the load of the CPU is adjusted to the first preset value, and the frequency of the CPU meets the optimal energy efficiency ratio of the CPU. In an embodiment of this application, the optimal energy efficiency ratio may be a maximum energy efficiency ratio. The maximum energy efficiency ratio may be determined by using an energy efficiency ratio table of the CPU, or may be preset. The first preset value may be a preset percentage that may enable the frequency of the CPU to meet the optimal energy efficiency ratio.

Specifically, the frequency of the CPU decreases to enable the load of the CPU to be the first preset value, so that the frequency of the CPU meets the optimal energy efficiency ratio of the CPU. In other words, a decreased frequency value of the CPU is written into the kernel node, to decrease the frequency of the CPU until the load of the CPU is adjusted to the first preset value, and the frequency of the CPU meets the optimal energy efficiency ratio of the CPU. It may be understood that, if the frequency of the CPU decreases, the load of the CPU needs to increase when a same task is processed, but the frequency of the CPU may decrease to reduce power consumption of the CPU, thereby improving an energy efficiency ratio.

In another embodiment of this application, the adjusting the frequency of the CPU to enable the load of the CPU to be a first preset value includes: writing a to-be-adjusted frequency of the CPU into a kernel node, to adjust the frequency of the CPU until the load of the CPU is adjusted to the first preset value. Specifically, a decreased frequency of the CPU is written into the kernel node, to decrease the frequency of the CPU until the load of the CPU is adjusted to the first preset value, and the frequency of the CPU meets the optimal energy efficiency ratio of the CPU.

In an embodiment of this application, the method further includes: if the load of the CPU is adjusted to the first preset value, determining whether an energy efficiency ratio of the CPU is the optimal energy efficiency ratio; and if the energy efficiency ratio of the CPU is the optimal energy efficiency ratio, executing the non-urgent task when the load of the CPU is the first preset value; or if the energy efficiency ratio of the CPU is not the optimal energy efficiency ratio, continuing to adjust the frequency of the CPU until the energy efficiency ratio of the CPU is the optimal energy efficiency ratio.

In another embodiment of this application, the method further includes: if the load of the CPU is adjusted to the first preset value, determining whether a difference between an energy efficiency ratio of the CPU and the optimal energy efficiency ratio is less than or equal to a third preset value; and if the difference between the energy efficiency ratio of the CPU and the optimal energy efficiency ratio is less than or equal to the third preset value, executing the non-urgent task when the load of the CPU is the first preset value; or if the difference between the energy efficiency ratio of the CPU and the optimal energy efficiency ratio is greater than the third preset value, continuing to adjust the frequency of the CPU until the difference between the energy efficiency ratio of the CPU and the optimal energy efficiency ratio is less than or equal to the third preset value.

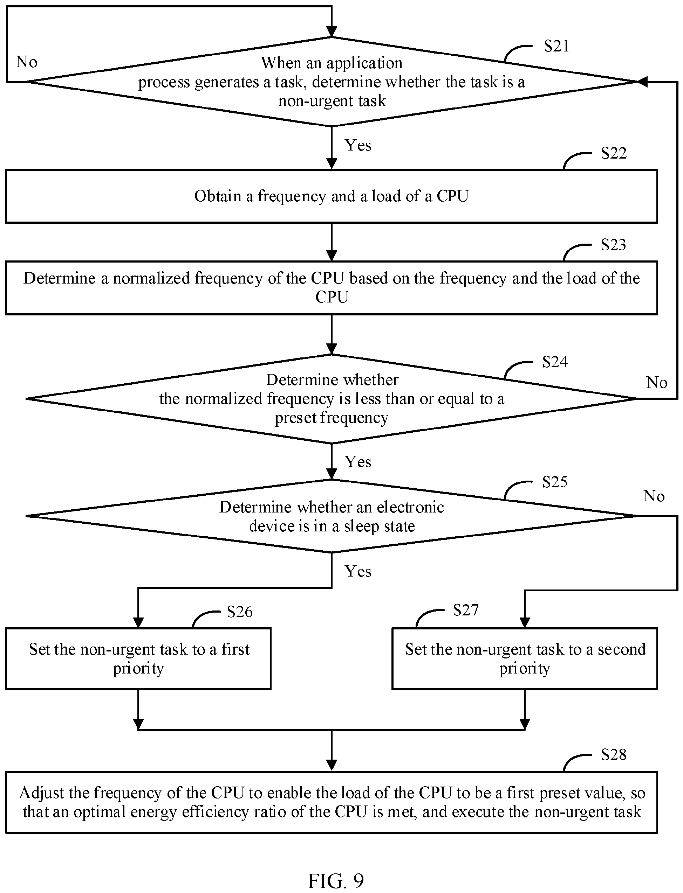

FIG. 9 is a schematic flowchart of a task scheduling method according to another embodiment of this application. The method is applied to an electronic device, and the task scheduling method includes the following steps.

S21: When an application process generates a task, determine whether the task is a non-urgent task.

S22: If the task is the non-urgent task, obtain a frequency and a load of a CPU.

S23: Determine a normalized frequency of the CPU based on the frequency and the load of the CPU.

S24: Determine whether the normalized frequency is less than or equal to a preset frequency.

S25: If the normalized frequency is less than or equal to the preset frequency, determine whether the electronic device is in a sleep state.

S26: If the electronic device is in the sleep state, set the non-urgent task to a first priority.

S27: If the electronic device is not in the sleep state, set the non-urgent task to a second priority.

In an embodiment of this application, the first priority is higher than the second priority. For example, the first priority is a high priority, and the second priority is a low priority. A high-priority task pool and a low-priority task pool may be preset in the electronic device. If the electronic device is in the sleep state, the non-urgent task is added to the high-priority task pool, and non-urgent tasks in the high-priority task pool are executed based on a time sequence of adding the non-urgent tasks to the high-priority task pool. If the electronic device is not in the sleep state, the non-urgent task is added to the low-priority task pool, and only after a task in the high-priority task pool is executed, non-urgent tasks in the low-priority task pool are executed based on a time sequence of adding the non-urgent tasks to the low-priority task pool.

S29: Adjust the frequency of the CPU to enable the load of the CPU to be a first preset value, so that an optimal energy efficiency ratio of the CPU is met, and execute the non-urgent task. Optionally, the first preset value is 90%.

In another embodiment of this application, actual running times runtime and virtual running times virtual runtime (vruntime) of non-urgent tasks with different priorities may be calculated according to a completely fair schedule (Completely Fair Schedule, CFS) algorithm, and the non-urgent tasks with different priorities are processed based on corresponding actual running times and virtual running times.

In another embodiment of this application, the calculating, according to a completely fair schedule algorithm, actual running times and virtual running times of non-urgent tasks with different priorities, and processing the non-urgent tasks with different priorities based on corresponding actual running times and virtual running times includes: determining a priority value of a non-urgent task based on a priority of the non-urgent task, where there is a one-to-one correspondence between a priority value of a task and a weight; determining a weight of the non-urgent task based on the priority value; determining an actual running time and a virtual running time of the non-urgent task based on the weight of the non-urgent task and a scheduling periodicity of the CPU, where the scheduling periodicity of the CPU is a time for scheduling all tasks of a current system, and the system always selects a non-urgent task having a minimum virtual running time; and processing the non-urgent task within a corresponding actual running time.

An actual running time runtime-the scheduling periodicity of the CPU*a weight of a task/a sum of weights of all tasks, a virtual running time vruntime=an actual running time*a weight corresponding to a priority value of 0/a weight of a task, and the weight corresponding to the priority value of 0 is 1024. Optionally, the scheduling periodicity of the CPU is 6 ms, and a value range of the priority value is [-20, 19]. A smaller priority value indicates a higher priority.

For example, the system currently includes two to-be-executed tasks A and B. A priority value of the task A is 0, and a weight corresponding to the priority value is 1024. A priority value of the task B is 1, and a weight corresponding to the priority value is 820. In this case, an actual running time of the task A is RT_{A}=6*1024/(1024+820)=3.3 ms, a virtual running time of the task A is VRT_{A}=3.3*1024/1024=3.3 ms, an actual running time of the task B is RT_{B}=6x820/(1024+820)=2.7 ms, and a virtual running time of the task B is VRT_{B}=2.4*1024/820=3 ms. It can be learned that, compared with the task A, the task B has a higher priority and a shorter virtual running time, and may be preferentially selected by the system for processing. In this case, according to the completely fair schedule algorithm, a task with a high priority can be preferentially processed.

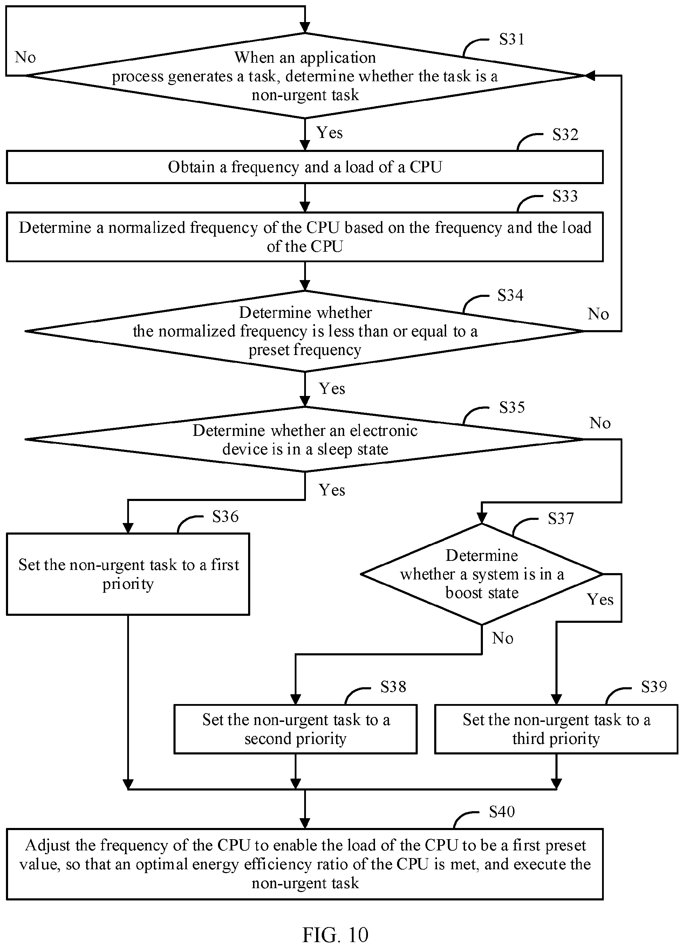

FIG. 10 is a schematic flowchart of a task scheduling method according to another embodiment of this application. The method is applied to an electronic device, and the task scheduling method includes the following steps.

S31: When an application process generates a task, determine whether the task is a non-urgent task.

S32: If the task is the non-urgent task, obtain a frequency and a load of a CPU.

S33: Determine a normalized frequency of the CPU based on the frequency and the load of the CPU.

S34: Determine whether the normalized frequency is less than or equal to a preset frequency.

S35: If the normalized frequency is less than or equal to the preset frequency, determine whether the electronic device is in a sleep state.

S36: If the electronic device is in the sleep state, set the non-urgent task to a first priority.

S37: If the electronic device is not in the sleep state, determine whether a system is in a boost (Boost) state.

In an embodiment of this application, the determining whether a system is in a boost state includes: determining whether the system is responding to an input operation of a user; and if the system is responding to the input operation of the user, determining that the system is in the boost state; or if the system is not responding to the input operation of the user, determining that the system is not in the boost state.

It may be understood that whether an input operation can be quickly responded to is one of key factors that affect user experience. If the system receives the input operation of the user, the system may enter the boost state, to improve system performance and quickly respond to the input operation of the user.

S38: If the system is not in the boost state, set the non-urgent task to a second priority.

S39: If the system is in the boost state, set the non-urgent task to a third priority.

In an embodiment of this application, the third priority is lower than the second priority. For example, the third priority is a limited priority. A limited priority task pool is further preset in the electronic device. If the system is in the boost state, the non-urgent task is added to the limited priority task pool, and after a task in a low-priority task pool is executed, non-urgent tasks in the limited priority task pool need to be executed based on a time sequence of adding the non-urgent tasks to the limited priority task pool. In another embodiment of this application, the non-urgent task with the third priority may alternatively be processed according to a completely fair schedule algorithm.

S40: Adjust the frequency of the CPU to enable the load of the CPU to be a first preset value, so that an optimal energy efficiency ratio of the CPU is met, and execute the non-urgent task. Optionally, the first preset value is 90%.

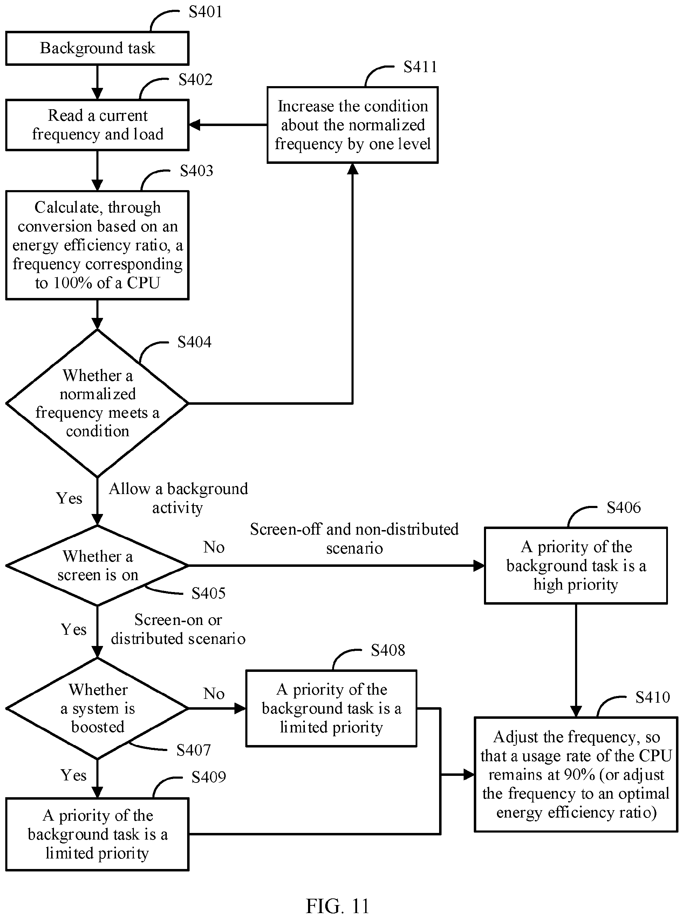

FIG. 11 is a schematic flowchart of a task scheduling method according to another embodiment of this application. The method is applied to an electronic device, and the task scheduling method includes the following steps.

S401: Detect a background task.

S402: Read a current frequency and load of a CPU.

S403: Calculate, through conversion based on an energy efficiency ratio, a frequency corresponding to a usage rate of 100% of the CPU.

S404: Determine whether a normalized frequency is less than or equal to a preset frequency. If the normalized frequency is less than or equal to the preset frequency, it indicates that a background activity is allowed, and proceed to S405 in the procedure; or if the condition is not met for N times, proceed to S411 in the procedure.

S405: Determine whether the electronic device is screen-on. If the electronic device is screen-off and is in a non-distributed scenario, proceed to S406 in the procedure; or if the electronic device is screen-on or is in a non-distributed scenario, proceed to S407 in the procedure.

S406: Set a priority of the background task to a high priority (prioHigh).

S407: Determine whether a system is in a boost state. If the system is not in the boost state, proceed to S408 in the procedure; or if the system is in the boost state, proceed to S409 in the procedure.

S408: Set a priority of the background task to a low priority (prioLow).

S409: Set a priority of the background task to a limited priority (prioLimit).

S410: After the priority of the background task is set, adjust the frequency of the CPU when the background task is executed, so that the usage rate of the CPU remains at 90%, or adjust the frequency of the CPU until an optimal energy efficiency ratio of the CPU is met.

S411: Increase the preset frequency by one level, and return to S402, that is, continue to read a current frequency and load of a CPU.

This embodiment of this application includes: When the background task needs to run, a resource scheduling service process of the system may read a current frequency of a little core of the CPU and an overall load of the little core. The normalized frequency is calculated based on the frequency and the load, that is, a frequency of the CPU corresponding to a load of 100% of the CPU is calculated based on an energy efficiency ratio table of a chip. Then, whether the background task is allowed to run in a current system status is determined based on the normalized frequency. If it is determined that an activity condition is met (for example, the background task is allowed to run in the current system status), the background activity may be allowed. Further, whether the current system receives a user operation is determined. If no user operation is received, a scheduling priority of a thread increases, and the frequency decreases until the overall usage rate of the CPU on which the task runs is about 90%. If a user performs an operation currently, the priority of the background task decreases as much as possible, and the frequency is adjusted as much as possible to enable the CPU to run with the usage rate of about 90%, to achieve the frequency with the optimal energy efficiency ratio in the current system status.

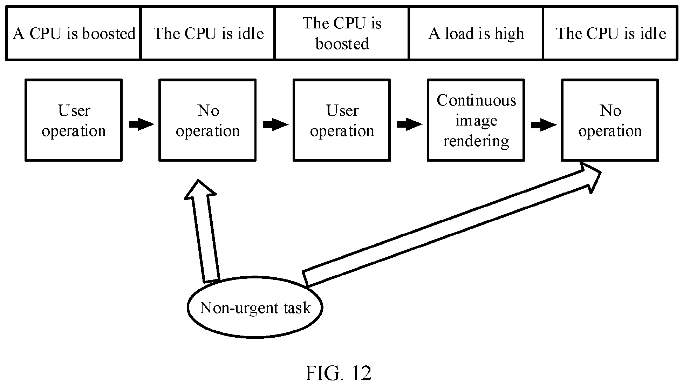

In this embodiment of this application, a non-urgent background task is specially scheduled, and is separated from a foreground operation task, to reduce impact on a foreground operation. In addition, the non-urgent background task is executed at an appropriate time, and is executed at a frequency at which the CPU has a high energy efficiency ratio, to reduce power consumption of the system and improve endurance of the electronic device. For example, with reference to FIG. 12, the non-urgent task may be executed in a state in which no operation is performed on the system. According to the task scheduling method provided in this embodiment of this application, in scenarios such as resource downloading, uploading, application updating, gallery training, photo retouching and optimizing, and video compression performed in a background, operations such as browsing Weibo, WeChat, TikTok, and news are performed in a foreground. This can effectively reduce stalling of the system, reduce power consumption of the system, and improve user responsiveness.

An embodiment of this application further provides a computer storage medium. The computer storage medium stores computer instructions. When the computer instructions are run on an electronic device, the electronic device is enabled to perform the foregoing related method, to implement the task scheduling method in the foregoing embodiments.

An embodiment of this application further provides a computer program product. When the computer program product runs on a computer, the computer is enabled to perform the task scheduling method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the task scheduling method in the foregoing method embodiments.

The electronic device, the computer storage medium, the computer program product, or the chip provided in embodiments of this application is configured to perform the corresponding method provided above. Therefore, for beneficial effects that can be achieved by the electronic device, the computer storage medium, the computer program product, or the chip, refer to the beneficial effects of the corresponding method provided above. Details are not described herein again.

Based on the foregoing descriptions of the implementations, a person skilled in the art may clearly understand that, for ease and brevity of description, division into the foregoing functional modules is merely used as an example for description. During actual application, the foregoing functions may be allocated to different functional modules for implementation based on a requirement, that is, an internal structure of an apparatus is divided into different functional modules, to implement all or some of the functions described above.

**In** the several embodiments provided in this application, it should be understood that the disclosed apparatus and method may be implemented in other manners. For example, the foregoing described apparatus embodiment is an example. For example, division into the modules or units is logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between apparatuses or units may be implemented in electronic, mechanical, or other forms.

The units described as separate components may or may not be physically separate. A component displayed as a unit may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the prior art, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended to describe the technical solutions of this application, but are not intended to limit the technical solutions of this application. Although this application is described in detail with reference to the example embodiments, a person of ordinary skill in the art should understand that modifications or equivalent replacements may be made to the technical solutions of this application, without departing from the spirit and scope of the technical solutions of this application.

## Claims

1. A task scheduling method, wherein the task scheduling method comprises:
when an application process generates a task, determining whether the task is a non-urgent task;
if the task is the non-urgent task, obtaining a frequency and a load of a central processing unit CPU of an electronic device;
determining a normalized frequency of the CPU based on the frequency and the load of the CPU, wherein the normalized frequency is a frequency corresponding to a load of 100% of the CPU;
determining whether the normalized frequency is less than or equal to a preset frequency;
if the normalized frequency is less than or equal to the preset frequency, determining whether the electronic device is in a sleep state; and
if the electronic device is in the sleep state, adjusting the frequency of the CPU to enable the load of the CPU to be a first preset value, so that an optimal energy efficiency ratio of the CPU is met, and executing the non-urgent task.

2. The task scheduling method according to claim 1, wherein the determining whether the task is a non-urgent task comprises:
when the application process generates the task, determining whether the application process is a background application process; and
if the application process is the background application process, determining that the task is the non-urgent task.

3. The task scheduling method according to claim 2, wherein the determining whether the application process is a background application process comprises:
invoking an activity of the application process by using an ActivityLifecycleCallbacks program, determining whether the activity of the application process runs in a background, and if the activity of the application process runs in the background, determining that the application process is the background application process.

4. The task scheduling method according to claim 2, wherein the determining whether the application process is a background application process comprises:
invoking a foreground application process by using a UsageStatsManager program, determining whether the invoked foreground application process comprises the application process, and if the invoked foreground application process does not comprise the application process, determining that the application process is the background application process.

5. The task scheduling method according to claim 2, wherein the determining whether the task is a non-urgent task comprises:
when the application process generates the task, determining whether the application process is the background application process, and determining whether the task expires; and
if the application process is the background application process, and the task does not expire, determining that the task is the non-urgent task.

6. The task scheduling method according to claim 2, wherein the determining whether the task is a non-urgent task comprises:
when the application process generates the task, determining whether the application process is the background application process, and determining whether the task is a high-load task; and
if the application process is the background application process, and the task is the high-load task, determining that the task is the non-urgent task.

7. The task scheduling method according to claim 6, wherein the determining whether the task is a high-load task comprises:
obtaining association information of the task and sending the association information of the task to a kernel layer;
querying historical load information of the task by using the kernel layer, and determining whether the historical load information of the task is greater than or equal to a load threshold; and
if the historical load information of the task is greater than or equal to the load threshold, determining that the task is the high-load task; or
if the historical load information of the task is less than the load threshold, determining that the task is not the high-load task.

8. The task scheduling method according to claim 1, wherein the obtaining a frequency and a load of a central processing unit CPU of an electronic device comprises:
obtaining a current frequency of a little core of the CPU and an overall load of the little core of the CPU through a resource scheduling service process of the electronic device.

9. The task scheduling method according to claim 1, wherein an energy efficiency ratio table of the CPU is preset in the electronic device, and the determining a normalized frequency of the CPU based on the frequency and the load of the CPU comprises:
determining, by querying the energy efficiency ratio table, a performance score corresponding to a current frequency of the CPU;
determining, based on the performance score corresponding to the current frequency and a current load, a performance score for a load of 100%; and
determining, by querying the energy efficiency ratio table, a frequency corresponding to the performance score for the load of 100%, to obtain a current normalized frequency of the CPU.

10. The task scheduling method according to claim 1, wherein the method further comprises:
determining whether a quantity of consecutive times the normalized frequency is greater than the preset frequency is greater than or equal to a second preset value; and
if the quantity of consecutive times the normalized frequency is greater than the preset frequency is greater than or equal to the second preset value, increasing the preset frequency.

11. The task scheduling method according to claim 1, wherein the determining whether the electronic device is in a sleep state comprises:
determining whether a display of the electronic device is off; and
if the display is off, determining that the electronic device is in the sleep state; or
if the display is on, determining that the electronic device is not in the sleep state.

12. The task scheduling method according to claim 11, wherein the determining whether the electronic device is in a sleep state comprises:
determining whether the display of the electronic device is off, and determining whether the electronic device is in a distributed scenario; and
if the display is off, and the electronic device is not in the distributed scenario, determining that the electronic device is in the sleep state; or
if the display is on, and/or the electronic device is in the distributed scenario, determining that the electronic device is not in the sleep state.

13. The task scheduling method according to claim 12, wherein the determining whether the electronic device is in a distributed scenario comprises:
determining whether the electronic device and at least one terminal device are in a cooperative working mode; and
if the electronic device and the at least one terminal device are in the cooperative working mode, determining that the electronic device is in the distributed scenario; or
if the electronic device and the at least one terminal device are not in the cooperative working mode, determining that the electronic device is not in the distributed scenario.

14. The task scheduling method according to claim 1, wherein the adjusting the frequency of the CPU to enable the load of the CPU to be a first preset value comprises:
writing a to-be-adjusted frequency value of the CPU into a kernel node, to adjust the frequency of the CPU until the load of the CPU is the first preset value.

15. The task scheduling method according to claim 14, wherein the method further comprises:
if the load of the CPU is adjusted to the first preset value, determining whether an energy efficiency ratio of the CPU is the optimal energy efficiency ratio; and
if the energy efficiency ratio of the CPU is the optimal energy efficiency ratio, executing the non-urgent task when the load of the CPU is the first preset value; or
if the energy efficiency ratio of the CPU is not the optimal energy efficiency ratio, continuing to adjust the frequency of the CPU until the energy efficiency ratio of the CPU is the optimal energy efficiency ratio.

16. The task scheduling method according to claim 14, wherein the method further comprises:
if the load of the CPU is adjusted to the first preset value, determining whether a difference between an energy efficiency ratio of the CPU and the optimal energy efficiency ratio is less than or equal to a third preset value; and
if the difference between the energy efficiency ratio of the CPU and the optimal energy efficiency ratio is less than or equal to the third preset value, executing the non-urgent task when the load of the CPU is the first preset value; or
if the difference between the energy efficiency ratio of the CPU and the optimal energy efficiency ratio is greater than the third preset value, continuing to adjust the frequency of the CPU until the difference between the energy efficiency ratio of the CPU and the optimal energy efficiency ratio is less than or equal to the third preset value.

17. The task scheduling method according to claim 1, wherein the method further comprises:
if the electronic device is in the sleep state, setting the non-urgent task to a first priority; or
if the electronic device is not in the sleep state, setting the non-urgent task to a second priority, wherein the first priority is higher than the second priority.

18. The task scheduling method according to claim 17, wherein the method further comprises:
if the electronic device is not in the sleep state, determining whether a system of the electronic device is in a boost state; and
if the system is not in the boost state, setting the non-urgent task to the second priority; or
if the system is in the boost state, setting the non-urgent task to a third priority, wherein the first priority is higher than the second priority, and the second priority is higher than the third priority.

19. A computer-readable storage medium, comprising computer instructions, wherein when the computer instructions are run on an electronic device, the electronic device is enabled to perform the task scheduling method according to any one of claims 1 to 18.

20. An electronic device, wherein the electronic device comprises a processor and a memory, the memory is configured to store instructions, and the processor is configured to invoke the instructions in the memory, to enable the electronic device to perform the task scheduling method according to any one of claims 1 to 18.

21. A chip, coupled to a memory in an electronic device, wherein the chip is configured to control the electronic device to perform the task scheduling method according to any one of claims 1 to 18.
